# EUROPEAN PATENT APPLICATION

(11) **EP 3 533 969 A1**
(43) Date of publication of application: **04.09.2019**
(21) Application number: 18159572.9
(22) Date of filing: 01.03.2018
(51) Int. Cl.: E21D 9/06

(54) **ADMIXTURE FOR PREVENTING SWELLING OF ANHYDRITE CONTAINING ROCK MATERIAL**

(71) Applicant: ETH Zürich, 8092 Zürich (CH); SIKA TECHNOLOGY AG, 6340 Baar (CH)
(72) Inventor: Flatt, Robert, 8706 Feldmeilen (CH); Wangler, Timothy, 8303 Bassersdorf (CH); Shahab, Amir Reza, 1475755761 Teheran (IR)
(74) Representative: Sika Patent Attorneys

(57) **Abstract**

A chemical inhibitor is used for reducing and/or preventing swelling of anhydrite containing rock material, wherein, preferably, the chemical inhibitor is used during construction work, especially in tunnel construction through rock material, especially in drill and blast tunnel construction work and/or in tunnel construction with a tunnel boring machine.

## Description

### Technical field

The invention relates to a use of a substance for reducing and/or preventing swelling of anhydrite containing rock material, in particular during construction work. Additionally, the invention is concerned with a composition comprising rock material and a method whereby construction work is carried out in rock material, in particular tunneling and/or mining operations in rock material.

### Background art

Tunnels through anhydritic claystones, such as those found for example in the Gipskeuper formation in northwest of Switzerland and southwest of Germany, have suffered numerous floor heave events for decades. For example, in the Chienberg tunnel near Sissach, Switzerland, even during construction a 1.5 meter floor heave was observed. Additionally, tunnels through similar formations (for example the Lilla tunnel through the Ebro Basin in Spain) suffer from the same problem.

These floor heave events occur due to two chemical processes, both of which require water: (i) the swelling of clay minerals and (ii) the crystallization pressure from the anhydrite to gypsum (ATG) transformation.

Unfortunately, during construction work, in particular during tunneling and mining, water is probably the most important and most widely used processing fluid. For example, water is typically used during drilling, cutting, cooling, dedusting, wetting, or flushing processes. Thus, if this water gets into contact with anhydrite containing rock material, swelling problems might occur already after a short period of time, i.e. within a few days or weeks.

The ATG problem on its own has proven to be a major issue in any geotechnical work that penetrates an anhydrite layer; the most publicized instance of this comes from the historical town center of Staufen im Breisgau, which has experienced heave of centimeters and numerous damage due to geothermal boreholes that allowed water to access the anhydrite layer. This problem can develop over decades, requiring periodic repairs, or it can also develop within just a few months, impacting the construction of the tunnel itself. In either case, the impact is very expensive. With new tunnels through the Gipskeuper formation or similar formations on the horizon, mitigation of this problem is of high importance.

To date, the only mitigation measures that have been taken have been to impose a counter pressure to resist the floor heave (via a concrete slab or other methods), or to control the water flow by using an adit tunnel. In the Chienberg Tunnel, more extreme and innovative geotechnical engineering strategies have been undertaken to resist floor heave, consisting of yielding elements in the emergency tunnel under the main roadway tunnel that can buy additional time before repairs are required. These geotechnical engineering measures are usually suitable when dealing with swelling clays. However, in the case of anhydrite-to-gypsum conversion, crystallization pressures can theoretically reach 20 to 50 MPa, and therefore improved methods are required.

There is thus a need to develop new and improved solutions which reduce or overcome the aforementioned drawbacks.

### Disclosure of the invention

It is an object of the present invention to provide methods which allow for reducing or preventing swelling problems in anhydrite containing rock material. Especially, the method shall allow for reducing and/or preventing swelling of anhydrite containing rock material during construction work, in particular during tunneling and/or mining operations. In particular it shall be possible to control short term swelling problem, i.e. swelling problems occurring on a time scale from days or weeks to months. Desirably, the method should be compatible with existing construction processes and be as flexible as possible.

Surprisingly, it has been found that the problem of the invention can be solved by the features of claim 1. Thus, the core of the invention is that a chemical inhibitor is used for reducing and/or preventing swelling of anhydrite containing rock material.

As has been shown, the inventive concept allows for a highly efficient reduction of swelling of anhydrite containing rock material. Thereby, the chemical inhibitor can be brought in close contact with the anhydrite containing rock material resulting in an efficient inhibition of swelling right at the origin of the problem. Because a chemical inhibitor is used, it can for example easily be added to a processing fluid, e.g. to drilling or flushing water, which is used during construction work. There is no need for additional measures such as constructive measures for example. Thus, the inventive concept is very well compatible with established processes in construction work such as in tunneling or mining operations. Consequently, the problem of short term swelling of anhydrite containing rock material caused by processing fluids such as water can be significantly reduced or even omitted in an efficient manner thanks to the inventive concept.

Further aspects of the invention are the subject matter of other independent claims. Especially preferred embodiments of the invention are the subject matter of the dependent claims.

### Ways of carrying out the invention

A first aspect of the invention relates to a use of a chemical inhibitor for reducing and/or preventing swelling of anhydrite containing rock material, especially during construction work, in particular during tunneling and/or mining operations.

Especially, the chemical inhibitor is used to control the anhydrite to gypsum transformation in anhydrite containing rock material. Thereby, "to control" stands in particular for adjusting, preferably decreasing, the rate of anhydrite to gypsum transformation in the anhydrite containing rock material. Preferably, the anhydrite to gypsum transformation is essentially prevented.

In the present context a "rock material" stands in particular for a natural substance in the form of a solid aggregate of one or more minerals and/or mineraloids. Especially, the rock material is a naturally occurring material and/or material origination of a geological formation.

"Anhydrite" is anhydrous calcium sulfate and can be represented by the formula CaSO₄. When exposed to water, anhydrite is dissolved and calcium sulfate dihydrate or gypsum (CaSO₄·2 H₂O) precipitates out of the supersaturated solution.

A "chemical inhibitor" is a substance that decreases the rate of, or prevents, a chemical reaction. This especially compared to a situation where the chemical inhibitor is absent. The chemical inhibitor can be present in any state of aggregation. For example the chemical inhibitor is solid, e.g. in the form of a powder, or liquid.

In the present context, the chemical inhibitor is in particular a substance which decreases the rate of dissolution of anhydrite in water and/or a substance which decreases the rate of gypsum formation from anhydrite and water. Preferably, the chemical inhibitor is a dissolution inhibitor for anhydrite, a gypsum nucleation inhibitor and/or a gypsum crystal growth inhibitor, especially in a system comprising anhydrite and water.

"Swelling" stands for a process of volume increase of a material, especially due to absorption of a fluid, in particular water. In particular, swelling stands for a swelling process caused by crystallization pressure during anhydrite to gypsum transformation.

In the present context, the term "tunneling" in particular means tunnel construction work with the aim of producing an underground passageway. "Mining" stands in particular for extraction of minerals and/or other geological materials from the earth, usually from an orebody, lode, vein, seam, reef and/or placer deposits.

According to a preferred embodiment, the chemical inhibitor is a gypsum retarder. A gypsum retarder is a substance which slows setting of calcium sulfate binder types. It comes with surprise that a substance such as a gypsum retarder, which is typically used in the gypsum industry, e.g. in wallboard or gypsum-based drymix production, is capable of inhibiting swelling of rock material. This in particular because rock material usually is composed of many and different types of minerals and mineraloids. Also it could not be expected that a gypsum retarder is effective under typical conditions present in tunneling and mining operations.

Especially, the chemical inhibitor is selected from amines, amides, organic acids and their salts, carboxylic acids, phosphates, phosphonates, phosphonic acids, complexing agents, gelatins, proteins, and/or protein hydrolysates.

Particularly preferred, the chemical inhibitor comprises at least one carboxylic acid group, at least one amine groups and/or at least one amide group. Even more preferred, the chemical inhibitor comprises two or more carboxylic acid groups in combination with two or more amine and/or amide groups.

According to a preferred embodiment, the chemical inhibitor comprises an amide group, in particular two amide groups, comprising additionally at least two, in particular three, carboxylic acid groups. For example, the chemical inhibitor is a reaction or condensation product of an amino acid and/or an amino acid derivate with an amine-free carboxylic acid and/or an amine free carboxylic acid derivative. Suitable reaction products and their method of production are e.g. described in US 2011 /0056409 A1 or US 2013/0289169 A1.

Thereby, preferably, the amino acid is chosen, in particular, from the group consisting of alanine, arginine, asparagine, aspartic acid, cysteine, glutamine, glutamic acid, glycine, histidine, isoleucine, leucine, lysine, lysine hydrochloride, methionine, phenylalanine, praline, serine, threonine, tryptophan, tyrosine, valine and/or aminobutanoic acid. Especially preferred, the amino acid is lysine and/or threonine.

In particular, the amine-free carboxylic acid and/or the amine-free carboxylic acid derivative is chosen from the group consisting of oxalic acid, acetic acid, propionic acid, 1,3-dipropionic acid, butanoic acid, succinic acid, maleic acid, fumaric acid, phthalic acid, pyromellitic acid, malic acid, tartaric acid, citric acid and/or the acid halides, acid anhydrides and/or esters of the specified compounds. It has been found that an amine-free carboxylic acid derivatives is especially preferred, in particular an amine-free carboxylic acid anhydride, for example succinic acid anhydride.

With particular preference, the chemical inhibitor comprises or is a reaction or condensation product of lysine with succinic acid anhydride, such as e.g. described in US 2011 /0056409 A1 or in US 2013/0289169 A1, especially according to production examples 1 or 3 in paragraphs 0055 to 0058 and paragraphs 0061 to 0064 of US 2013/0289169 A1.

Especially preferred, the chemical inhibitor is a reaction product, preferably a diproduct, formed from two molar fractions of succinic acid anhydride and one molar fraction of lysine.

In another preferred embodiment, the chemical inhibitor comprises or is a polycarboxylic acid, in particular a polyacrylic acid and/or polymethacrylic acid. Preferably, an average number molecular weight Mₙ of the polycarbocxylic acid is 500 - 15'000 g/mol, especially 1'000 - 10'000 g/mol, in particular 2'000 - 7'000 g/mol, especially preferred 3'500 - 6'000 g/mol.

According to a further preferred embodiment, the chemical inhibitor comprises or is is a chelating compound, in particular an aminopolycarboxylic acid. An aminopolycarboxylic acid is a compound containing one or more nitrogen atoms connected through carbon atoms to two or more carboxyl groups. For example the aminopolycarboxylic acid comprises diethylene triamine pentaacetic acid, nitrilotriacetic acid, iminodiacetic acid, egtazic acid, 1,2-bis(o-aminophenoxy)ethane-N,N,N',N'-tetraacetic acid, 1,4,7,10-tetraazacyclododecane-1,4,7,10-tetraacetic acid, ethylenediamine-N,N'-bis(2-hydroxyphenylacetic acid) and/or ethylene diamine tetraacetic acid.

Preferably, the chemical inhibitor is a neutral or negatively charged compound. In particular, the chemical inhibitor does not comprise any positively charged groups and/or any quaternary amine groups. Especially, the chemical inhibitor is not a zwitterionic compound.

As it turned out, such kind of chemical inhibitors are highly beneficial if the rock material comprises clays. Surprisingly, the effectiveness of these chemical inhibitors are hardly affected by clays. Unlike other substances, these kind if inhibitors are hardly absorbed by clays. Thus, these chemical inhibitors essentially keep their inhibiting function with regard to the anhydrite to gypsum transformation even in the presence of clays.

In particular the chemical inhibitor is dissolved and/or dispersed in a fluid, especially in a processing fluid, in particular a processing liquid, for construction work. In particular the fluid is a fluid used in tunneling and/or mining operations.

Especially, the fluid comprises or essentially consists of water. In particular, a proportion of water in the fluid is at least 30 wt.%, especially at least 50 wt.%, preferably at least 70 wt.% or at least 90 wt.%, with respect to all fluid components apart from the chemical inhibitor.

For example, the fluid is a drilling fluid, a drilling mud, a flushing fluid, a lubricating fluid, a cutting fluid, a wetting fluid and/or a coolant, especially for construction work, in particular for tunneling and/or mining operations. Thus, the fluid is used for drilling, flushing, lubricating, cutting, wetting and/or cooling, in particular during construction work, especially in tunneling and/or mining operations.

Preferably, a proportion of the chemical inhibitor is 0.001 - 50 wt.%, in particular 0.01 - 25 wt.%, especially 0.1 - 10 wt.%, especially preferred 0.3 - 5 wt.% or 0.5 - 2 wt.%, with respect to the total amount of the fluid and the chemical inhibitor.

Regarding the rock material, it preferably comprises 0.01 - 100 wt.% of anhydrite, especially 1 - 85 wt.% of anhydrite, in particular 5-80 wt.% of anhydrite, preferably 10 - 70 wt.% or 30 - 60 wt.% of anhydrite, with respect to the overall weight of the rock material.

According to a special embodiment, the rock material comprises anhydrite and clay. The term "clay" in particular stands for phyllosilicate minerals. Thereby, a weight proportion of anhydrite and clay together in the rock material is at least 25 wt.%, especially at least 35 wt.%, in particular at least 45 wt.%, preferably at least 50 wt.% or at least 60 wt.%, of the overall weight of the rock material.

If clays are present, the rock material comprises 0.1 - 90 wt.% of clay, especially 1 - 85 wt.% of clay, in particular 5-80 wt.% of clay, preferably 10 - 75 wt.% or 25 - 60 wt.% of clay.

Especially, the rock material comprises or consist of rock material of the Gipskeuper formation, especially the Swiss Gipskeuper formation.

The chemical inhibitor is preferably used in construction work, for example in quarrying, civil engineering, tunneling and/or mining operations. Especially, the chemical inhibitor is used in construction work through and/or inside rock material, in particular by drilling and blasting and/or by using a tunnel boring machine.

In particular, the chemical inhibitor is used in tunnel construction through rock material, especially in drill and blast tunnel construction work and/or in tunnel construction work with a tunnel boring machine.

A "tunneling boring machine" (abbreviation: TBM) is known to the person skilled in the art. Typically it comprises a rotatable cutting wheel or cutter head, respectively. For example the cutting wheel has a diameter of 1 cm - 20 m, 1 - 20 m or 3 - 12 m. Additionally, the tunneling boring machine usually comprises a main drive for rotating the cutting wheel and a thrust system for pressing the cutting wheel against the geological material or rock material to be drilled and for moving the tunneling boring machine along the bore hole. Moreover, supporting systems, e.g. for carrying away drilling material, may be present as well.

When operating a tunneling boring machine, fluids, such as e.g. water, are used for example for the purpose of lubricating, cooling and/or dedusting.

The "Drill and blast" technique is as well known to the person skilled in the art. In particular, it comprises the controlled use of explosives and/or other methods, such as gas pressure blasting pyrotechnics, to break geological material, e.g. rock material, for excavation. Typically, this method comprises the one or more of the following steps:
i) drilling one or more holes that predefine the advance length
ii) charging the holes with explosives
iii) stemming and/or sealing the holes to prevent energy losses
iv) blasting
v) ventilation, dust and/or noxious gas control
vi) mucking and/or removal of blasted material
vii) adding support to the newly created cavity.

Especially, all of these steps i) to vii) are carried out in the order given above. Typically, during these series of steps, a fluid, such as e.g. water, is used during the drilling and ventilation steps, for example for the purpose of lubricating, cooling and/or dedusting.

Thus, in construction work, for example in drill and blast tunnel construction work and/or in tunnel construction work with a tunnel boring machine, water from an external source is typically added to the processes and gets into contact with rock material. Without further measures, with anhydrite containing rock material, the anhydrite to gypsum transformation will start, resulting in a swelling of the rock material. However, if the water comprises the chemical inhibitor according to the present invention, the anhydrite to gypsum reaction can essentially be suppressed.

According to a further preferred embodiment, the chemical inhibitor is used in combination with a clay stabilizer. Typically, the clay stabilizer is chemically and/or structurally different from the chemical inhibitor. With such a combination, swelling caused by anhydrite to gypsum transformations as well as swelling caused by hydration of clays can be resolved in one step.

Suitable clay stabilizers should be selected such that they do not interfere with the chemical inhibitor. For example, the clay stabilizer can be chosen from the group consisting of mineral salts, e.g. KCI, NaCl, CaCl₂, aliphatic amines, quaternary ammonium compounds, e.g. tetramethyl ammonium chloride, quaternized amine polymers, polyquaternized amines, e.g. diallyl dimethyl ammonium chloride (DADMAC) polymers or copolymers, and/or polymers formed from epichlorohydrin and dimethyl amine.

A further aspect of the present invention is related to a composition comprising a chemical inhibitor and a rock material. The chemical inhibitor as well as the rock material are in particular defined as described above.

Preferably, the composition further comprises a fluid, especially a fluid as described above, preferably water. Proportions and specific substances are preferably chosen as described above in the context of the use of the chemical inhibitor.

Also, an aspect of the present invention is related to a composition comprising a chemical inhibitor and a clay stabilizer. Both, the chemical inhibitor and the clay stabilizer are preferably defined as described above. Such a composition can e.g. be a one-component, a two-component or even a multi-component composition, if further components are present. With a two-component composition, for example, the chemical inhibitor can be present in a first receptacle whereas the clay stabilizer is present in a second receptacle.

Furthermore, the invention is related to a method whereby construction work is carried out in rock material, in particular tunneling and/or mining operations in rock material, whereby a chemical inhibitor capable of reducing and/or preventing swelling of anhydrite containing rock material is added to a processing fluid used in the construction work.

Thereby, the chemical inhibitor, the fluid, the rock material and the construction work are defined as described above.

Thus, preferably, the fluid comprises or essentially consists of water. In particular, a proportion of water in the fluid is at least 30 wt.%, especially at least 50 wt.%, preferably at least 70 wt.% or at least 90 wt.%, with respect to all fluid components apart from the chemical inhibitor.

Especially preferred, the fluid is a drilling fluid, a drilling mud, a flushing fluid, a lubricating fluid, a cutting fluid, a wetting fluid and/or a coolant, especially for construction work, in particular for tunneling and/or mining operations. Thus, the fluid is used for drilling, flushing, lubricating, cutting, wetting and/or cooling, in particular during construction work, especially in tunneling and/or mining operations.

Preferably, a proportion of the chemical inhibitor is 0.001 - 50 wt.%, in particular 0.01 - 25 wt.%, especially 0.1 - 10 wt.%, especially preferred 0.3 - 5 wt.% or 0.5 - 2 wt.%, with respect to the total amount of the fluid and the chemical inhibitor.

Preferably, the chemical inhibitor is added to the fluid at the same time and/or before the fluid contacts the rock material. Especially preferred, the chemical inhibitor is added to the processing fluid before the fluid contacts the rock material.

In particular, the chemical inhibitor is added to a drilling fluid which is used during drilling a hole in the rock material.

In particular, the chemical inhibitor is added to a fluid which is used during tunnel construction through rock material, especially to a fluid used in drill and blast tunnel construction work and/or to a fluid used in tunnel construction work with a tunnel boring machine.

In a special embodiment, the chemical inhibitor is added into a fluid used in a tunnel boring machine and/or a fluid exiting such a machine.

Further advantageous embodiments and combinations of features of the invention will emerge from the following exemplary embodiments and the totality of the patent claims.

### Brief description of the drawings

The drawings used to explain the embodiments show:

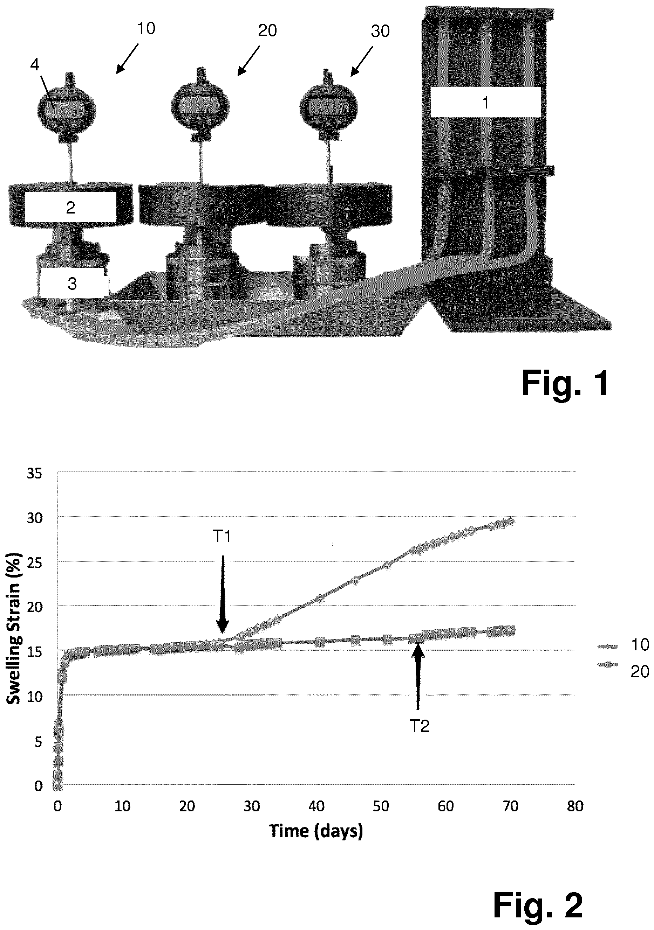

- Fig. 1: The experimental setup for oedometer experiments. An oedometer consists of a steel ring with a pressed sample inside, capped by two porous plates. One plate can move uniaxially to allow deformation (swelling) of the sample as it is wetted from the bottom used for testing swelling in anhydrite containing rock material;
- Fig. 2: The results of oedometer test series. Two oedometers were saturated and placed in a 60 °C oven to allow clay swelling. At indicated point (T1), 1^{st} oedometer was removed to 20 °C environment, where immediately ATG conversion took place as seen. At second indicated point (T2), 2^{nd} oedometer was removed and placed in 20 °C environment, but fluid was replaced with 1% chemical inhibitor solution. ATG clearly is stopped as can be seen compared to 1^{st} oedometer.

In the figures, the same components are given the same reference symbols.

### Exemplary embodiments

### 1. Methods

In order to test the ability of various substances to reduce swelling of anhydrite containing rock material, oedometer tests have been performed. Oedometers are well known devices in geological engineering.

Fig. 1 shows the oedometers 10, 20, 30 used for this invention. They consist of a steel ring 3 (cf. first oedometer 10) with a pressed sample (anhydrite containing rock material) inside, capped by two porous plates (not shown in Fig. 1). The upper plate can move uniaxially to allow deformation (swelling or consolidation) of the sample as it is wetted from the bottom through the other porous plate. For wetting, fluid lines 1 are connected to the lower portions of the oedometers which allow for introducing fluid into the steel ring 3. Put differently, the fluid, e.g. water, induces swelling (or consolidation) so that the upper porous plate is allowed to rise (or fall) in response to the wetted material, and the swelling is measured here with a gauge 4. Additionally, a counterpressure of about 5 kPa was imposed by placing a counterweight 2 on top of the upper plate. The rise of the upper plate upon swelling is a measure of the swelling strain or volume increase of the sample.

In order to exclude any interference with clay swelling, clay swelling and the anhydrite to gypsum (ATG) swelling were decoupled by running initial swelling experiments with pure water as wetting fluid in an oven at 60°C. It is known that at temperatures above approximately 42°C, the solubility of anhydrite is lower than that of gypsum, and therefore anhydrite is the most stable phase. Thus, at 60°C, anhydrite to gypsum (ATG) swelling is essentially excluded and any swelling occurring at this temperature is related to pure clay swelling.

Subsequently, the oedometers were taken out of the oven and placed in room temperature conditions. After some days (cf. results), the wetting fluids were replaced with fluids comprising chemical inhibitors as explained below. Apart from the differences explained below, all of the experiments have been performed under identical conditions.

Swelling of the samples (swelling strain) was recorded on a regular base, from the beginning of the experiments up to 70 days.

### 2. Experiments and Results

### 2.1 Experiment 1

In a first experiment, crushed rock powder from construction work at Belchen tunnel in Switzerland running through Swiss Gipskeuper formation (containing clay as well as anhydrite rock material) was pressed and placed in two oedometers 10, 20 and treated as described above with pure water as wetting fluid.

**Table 1: Composition of rock material used in the experiments (Rietveld analysis)**

| **Component** | **Proportion [wt.%]** |
|---|---|
| Anhydrite | 43.1 |
| Chlorite | 4.5 |
| Illite/Muscovite | 6.5 |
| Magnesite | 11.6 |
| K-feldspar | 4.5 |
| Pyritre | 0.7 |
| Quartz | 5.1 |
| Smectite/Corrensite | 24.0 |
| **Sum** | **100** |

In Fig. 2, the swelling strain as a function of time observed during the experiment is shown. In the first days, swelling to approximately 15% swelling strain is observed in both oedometers 10 and 20. Without being bound to theory, it can be reasonably assumed to be purely clay swelling due to the temperature of 60°C in the oven. At the first point of time T1 indicated in the Fig. 2 (about 27 day after start of the experiment), oedometer 10 was removed from the oven and placed in an environment with 20°C. One would expect then that ATG takes place and that swelling can be observed, and this is indeed the case since the swelling strain in the first oedometer 10 starts increasing again (cf. line with diamond marks in Fig. 2).

Next, the second oedometer 20 was removed from the 60°C environment and placed in a 20°C environment at a second point in time T2 (about 57 day after start of the experiment). However, with oedometer 20, its fluid was then replaced with a solution comprising 1 wt.% of a chemical inhibitor in water. The chemical inhibitor is a condensation product of lysine and succinic acid anhydride as described and produced according paragraphs 0055 - 0058 of US 2013/0289168 A1.

As can be seen from the Fig. 2, the ATG conversion in the second oedometer 20 is essentially suppressed by the solution of the chemical inhibitor, as hardly any increase in the swelling is recorded (cf. flat line with square marks in Fig. 2).

Standard thermogravimetric analysis (TGA) analysis later confirmed that there was no conversion of ATG in oedometer 20 (with chemical inhibitor), but with >90% conversion in oedometer 10 (with no inhibitor).

### 2.2 Experiments 2 - 3

Similar experiments have been performed with different chemical inhibitors as shown in table 2:

**Table 2 Inhibitors used in further experiments**

| **Exp. no.** | **Chemical inhibitor** | **Efficacy** |
|---|---|---|
| 2 | polyacrylic acid (Mₙ = 5'000 g/mol) | Comparable with experiment 1 |
| 3 | diethylenetriaminepentaacetic acid (DTPA) | Comparable with experiment 1 |

### 2.3 Conclusion

As shown, the chemical inhibitors have been demonstrated unequivocally to function in their role of inhibiting the transformation of anhydrite to gypsum and the ensuing swelling from crystallization pressure. This means that if such kind of inhibitors are delivered to any affected material area, they will prevent swelling from this phenomenon.

It will be appreciated by those skilled in the art that the present invention can be embodied in other specific forms without departing from the spirit or essential characteristics thereof. The presently disclosed embodiments are therefore considered in all respects to be illustrative and not restricting.

## Claims

1. Use of a chemical inhibitor for reducing and/or preventing swelling of anhydrite containing rock material.

2. Use according to claim 1, wherein the chemical inhibitor a dissolution inhibitor for anhydrite, a gypsum nucleation inhibitor and/or a gypsum crystal growth inhibitor.

3. Use according to at least any of claims 1 - 2, wherein the chemical inhibitor comprises at least one carboxylic acid group, at least one amine group and/or at least one amide group, especially, the chemical inhibitor comprises two or more carboxylic acid groups and two or more amine and/or amide groups.

4. Use according to at least any of claims 1 - 3, wherein the chemical inhibitor comprises or is a reaction or condensation product of an amino acid and/or an amino acid derivate with an amine-free carboxylic acid and/or an amine free carboxylic acid derivative, preferably a reaction or condensation product of lysine with succinic acid anhydride, especially a reaction or condensation product formed from two molar fractions of succinic acid anhydride and one molar fraction of lysine.

5. Use according to at least any of claims 1 - 4, wherein the chemical inhibitor comprises or is a polycarboxylic acid, in particular a polyacrylic acid and/or polymethacrylic acid.

6. Use according to at least any of claims 1 - 5, wherein the chemical inhibitor comprises or is a chelating compound, in particular an aminopolycarboxylic acid, preferably the chemical inhibitor comprises diethylene triamine pentaacetic acid, nitrilotriacetic acid, iminodiacetic acid, egtazic acid, 1,2-bis(o-aminophenoxy)ethane-N,N,N',N'-tetraacetic acid, 1,4,7,10-tetraazacyclododecane-1,4,7,10-tetraacetic acid, ethylenediamine-N,N'-bis(2-hydroxyphenylacetic acid) and/or ethylene diamine tetraacetic acid, preferably diethylene triamine pentaacetic acid.

7. Use according to at least any of claims 1 - 6, wherein the chemical inhibitor does not comprise any positively charged groups and/or any quaternary amine groups.

8. Use according to at least any of claims 1 - 7, wherein the chemical inhibitor is dissolved and/or dispersed in a fluid, especially in a processing fluid, in particular in a processing liquid, for construction work, wherein the fluid preferably comprises or consists of water.

9. Use according to claim 8, wherein a proportion of the chemical inhibitor is 0.001 - 50 wt.%, in particular 0.01 - 25 wt.%, especially 0.1 - 10 wt.%, preferably 0.3 - 5 wt.% or 0.5 - 2 wt.%, with respect to the total amount of the fluid and the chemical inhibitor.

10. Use according to at least any of claims 1 - 9, wherein the rock material comprises 0.01 - 100 wt.% of anhydrite, especially 1 - 85 wt.% of anhydrite, in particular 5-80 wt.% of anhydrite, preferably 10 - 70 wt.% or 30 - 60 wt.% of anhydrite, with respect to the overall weight of the rock material.

11. Use according to at least any of claims 1 - 10, wherein the rock material comprises 0.1 - 90 wt.% of clay, especially 1 - 85 wt.% of clay, in particular 5-80 wt.% of clay, preferably 10 - 75 wt.% or 25 - 60 wt.% of clay.

12. Use according to at least any of claims 1 - 11, wherein the chemical inhibitor is used in construction work, preferably during tunnel construction through rock material, especially in drill and blast tunnel construction work and/or in tunnel construction with a tunnel boring machine.

13. Composition comprising a chemical inhibitor as well as rock material as described in any one of the preceding claims.

14. A method whereby construction work is carried out in rock material, in particular tunneling and/or mining operations in rock material, whereby a chemical inhibitor capable of reducing and/or preventing swelling of anhydrite containing rock material is added to a processing fluid used in the construction work.

15. Method according to claim 25 whereby the chemical inhibitor is added to the processing fluid before the fluid contacts the rock material.
